# EUROPEAN PATENT APPLICATION

(11) **EP 4 838 359 A2**
(43) Date of publication of application: **11.11.2026**
(21) Application number: 26172870.3
(22) Date of filing: 16.04.2026
(51) Int. Cl.: G06F 9/48

(54) **CLOUD-EDGE COMPUTING RESOURCE COST OPTIMIZATION**

(30) Priority: 17.04.2025 IN 202511037246
(71) Applicant: Honeywell International Inc., Charlotte, NC 28202 (US)
(72) Inventor: TRENCHARD, Andrew J., Charlotte, 28202 (US); CHANDRA, Satish, Charlotte, 28202 (US); MANIKFAN, Sameer, Charlotte, 28202 (US); KHATRI, Ambika, Charlotte, 28202 (US); KASTELEIN, Bas, Charlotte, 28202 (US)
(74) Representative: Haseltine Lake Kempner LLP

(57) **Abstract**

An example system for optimizing compute resource allocation in a distributed computational environment comprises: an edge compute platform having a processor and memory; a cloud compute platform communicatively coupled to the edge compute platform; and a function block deployment agent executing on the edge compute platform configured to: receive data related to availability of central processing unit (CPU) and memory resources in the cloud platform and the edge compute platform; receive historical datasets of CPU and memory usage; process the received data and historical datasets to determine CPU/memory costs associated with the cloud compute platform and the edge compute platform; and generate an allocation schedule for management applications between the edge compute platform and the cloud compute platform.

## Description

### Technical Field

The present disclosure relates to systems, devices, and methods for cloud-edge computing resource cost optimization.

### Background

Battery energy storage systems (BESS) utilize chemical energy storage technologies, such as lithium-ion (Li-ion), lead-acid (Pb), and sodium-sulfur (NAS) batteries. These batteries are charged and discharged through power conversion systems (PCS) connected to electrical grids. BESS can function within standalone systems, be integrated into microgrids, or be part of virtual power plant (VPP) configurations, where multiple battery storage units work together to optimize power distribution, load balancing, and grid stability. The power and energy capacity of a BESS is determined by the number of battery racks within the system. Large-scale BESS installations often consist of multiple containers, each housing several battery modules, all connected to one or more power conversion systems. This modularity allows for scalability, enabling utilities and energy providers to deploy BESS solutions tailored to specific grid demands.

BESS operations rely on state of charge (SoC) and state of health (SoH) estimates from battery management systems (BMS). However, these subsystems cannot accurately estimate the SoC and SoH as batteries go through many shallow cycles. Even deep cycles, during normal operations in the range of 10% SoC to 95% SoC, are not deep enough for the BMS to determine the real capacity limits that would be encountered when a battery is cycled from 0% to 100%. The battery and BMS go through full cycles of 0% to 100% only during calibration tests, which are typically carried out periodically every 6 months to 1 year. During battery operations between the calibration cycles, the BMS loses its ability to track the real capacity. This, in turn, causes overcharging and deep discharge events whenever the battery is fully cycled. Such events irreversibly reduce battery life and risk missing warranty targets. A data and analytics platform executes models of battery performance and degradation, providing a better estimate of the battery's real capacity. This information will be used by the energy control system to ensure that the real limits are not exceeded during battery energy storage operations and reduce the risk to, and lifecycle costs of, BESS operations.

Notably, additional costs arise when BESS management applications-such as battery state-of-health (SOH) tracking and predictive analytics-are executed on cloud-based platforms (i.e., a cloud compute platform). Many modern BESS deployments rely on cloud-based solutions for real-time monitoring, control, and predictive maintenance, which can improve system efficiency and longevity.

Moreover, the use of cloud-based approaches results in large amounts of network traffic (e.g., large amounts of uncompressed data being uploaded/downloaded between an edge platform (i.e., an edge compute platform) and the cloud platform and/or results in continuous or frequent (e.g., periodic) data transmission between the edge and cloud platform. Such continuous or frequent (e.g., periodic) transmission and/or processing of the large amounts of data between the cloud platform and the edge platform can result in additional costs associated with BESS management applications (e.g., which may be operated or maintained based on analysis of the data transmitted between the cloud platform and the edge platform and/or may present security risks such as those due to the frequent transmission of large amounts of data.

What is desired in the integration of cloud and edge computing to permit sophisticated monitoring and control capabilities while providing flexibility in how and where computational resources are allocated, thereby achieving optimized management of BESS or other systems in a cost effective manner.

### Summary

The present disclosure relates generally to systems, devices, and methods for cloud-edge computing cost optimization. The systems, devices, and methods are described herein in the context of a BESS and energy management applications. However, the disclosure is not so limited and the systems, devices, and methods herein may be deployed in various other contexts or distributed control system environment such as microgrids, distributed generation systems, peeker power plants, virtual power plants (VPPs), smart grids, electric vehicle charging networks, distributed heating and/or cooling systems, renewable energy integration systems, decentralized computing networks, and/or different types of management applications, among other types of distributed environments and/or management applications.

The invention provides a cloud-edge collaboration platform for optimizing compute costs and resource allocation between cloud platforms and edge compute platforms for various distributed control system environments such as a BESS. Specifically, it optimizes memory and CPU allocation for management applications (e.g., energy management applications) by minimizing cloud compute costs and leveraging edge compute infrastructure efficiently. Edge computing enables real-time data processing at the device level, reducing latency and cloud dependency while improving system resilience and security. By distributing computational workloads between cloud and edge environments, utilities and energy providers can achieve faster response times for load balancing and grid management, reduced reliance on cloud-based platforms, lower operational costs, enhanced system reliability by decentralizing critical computations, and/or improved cybersecurity through localized data processing.

The integration of cloud and edge computing is a highly desirable strategy for distributed control system environment management e.g., BESS and grid management, enabling sophisticated monitoring, control, and optimization capabilities. By leveraging a hybrid computing approach, energy providers can enhance flexibility, efficiency, and cost savings, ultimately ensuring smarter and more resilient distributed control system environment management e.g., relating to energy storage solutions for modern power grids.

As an example, a function block deployment agent at the edge device receives inputs related to CPU/memory resource availability in the cloud and at the edge, as well as historical CPU/memory usage data. An event bus from the energy management system triggers the deployment agent, which processes the received data using a machine-learning (ML) model to determine CPU/memory costs and optimal allocation schedules for management applications. The machine-learning models, unless otherwise specified herein, can be unsupervised, semi-supervised, or supervised machine-learning models. The machine-learning models herein can be trained to perform various aspects herein. For instance, the machine-learning models can be trained (e.g., at the cloud platform) with an aggregated data set that includes real-world data or a derivative of real-world data from two or more data sources (e.g., data from two or more edge compute platforms) described herein. Once trained the machine-learning model can be conveyed to the cloud compute platforms for execution thereon. Training the machine-learning models with the aggregated data set (e.g., data from two or more edge compute devices) can yield trained machined-learning models that are more effective in allocating compute resources of cloud and edge platforms, for instance, as compared to other approaches such as those that train machine-learning models with an individual data set from an individual data source and/or that rely on manual analysis of data (e.g., manual analysis of operating condition, manual analysis of energy demand and/or costs, CPU/memory availability, etc.). Hence, the system optimizes cloud execution through algorithms that improve edge platform utilization in distributed computation systems such as those associated with a BESS, enabling various benefits such as the aggregation of microgrids deploying distributed battery energy storage systems.

The cloud-edge collaboration platform employs a serverless framework and intelligent workload distribution between cloud and edge environments to minimize operational costs associated with various systems such as minimizing operational costs in battery energy storage management. It consists of a cloud platform hosting ML models and analytics applications, connected to edge computing platforms that run containerized environments and IEC 61499 Function Blocks. As used herein, an IEC 61499 function block refers to a function block configured to operate in accordance with the IEC 61499 international standard. For example, the IEC 61499 function block can include inputs, outputs, internal variables, and logic for executing specific tasks, such as those described herein relating to cloud-edge computing cost optimization. In some embodiments, a CPU and memory resource (compute resource) monitoring agent can feed data to an ML-based scheduler policy function approximator, which can (e.g., continuously) optimizes resource allocation based on energy cost savings and cloud execution costs.

As detailed herein, the multi-level control architecture includes BESS unit controllers, energy control system (ECS) supervisors, and virtual power plant (VPP) coordination to manage multiple microgrids.

The ML models herein can predict future resource usage, optimize CPU and memory allocation between edge and cloud resources, and manage workload distribution based on real-world performance data. The edge platform also compresses and encrypts data before cloud transmission, ensuring security while reducing bandwidth costs. To enhance efficiency, the systems and methods herein can utilize edge platforms configure to implement data compression before a cloud upload. In some embodiments, the time and/or content of the cloud upload can be based on or leverage correlations between current and historical data.

In view of the above, the systems, devices and methods herein can yield cost-effective management of distributed assets such as distributed battery energy storage assets while protecting customer intellectual property. Additionally, at least in view of the above, the system, devices, and methods herein, can mitigate downtime and/or repair/replacement costs associated with monitored systems such as BESS.

A particular example of the present disclosure includes an illustrative system for optimizing compute resource allocation in a distributed computational environment (e.g., a distributed control system environment) comprises: an edge compute platform having a processor and memory; a cloud compute platform communicatively coupled to the edge compute platform; and a function block deployment agent executing on the edge compute platform configured to: receive data related to availability of central processing unit (CPU) and memory resources in the cloud platform and the edge compute platform; receive historical datasets of CPU and memory usage; process the received data and historical datasets to determine CPU/memory costs associated with the cloud compute platform and the edge compute platform; and generate an allocation schedule for management applications between the edge compute platform and the cloud compute platform

Another example of the present disclosure includes a method for optimizing resource allocation between edge and cloud platforms in an energy storage system, comprising: monitoring, by a function block deployment agent, real-time availability of compute resources on an edge platform and a cloud platform; collecting historical usage data for central processing unit (CPU) and memory resources; receiving an event trigger from an energy management system; responsive to receiving the event trigger, determining a cost optimization for executing management applications by: evaluating an energy cost associated execution on the edge platform; and evaluating a compute cost for execution on the cloud platform, and selecting, based on the cost optimization, between edge and cloud execution of an application or service.

Another example of the present disclosure includes a non-transitory, computer-readable medium including instructions that when executed by a processor cause the processor to: receive resource availability data from an edge compute platform and a cloud compute platform, wherein the edge compute platform is collocated with one or more battery energy storage system (BESS) containers; accessing historical resource utilization data and battery state of health data from the one or more BESS containers; receive an event trigger from a BESS energy management system indicating a change in battery operating conditions of the BESS; execute a machine-learning model to: analyze the resource availability data, historical utilization data, and battery state of health data of the BESS; determine processing costs for edge execution versus cloud execution; generate a resource allocation schedule for energy management applications between the edge platform and cloud platform based on the determined costs; and minimize costs associated with calculation or forecasting battery performance of the BESS through intelligent distribution of utilization of compute resources of the edge platform and the cloud platform in accordance with the resource allocation schedule.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
FIG. 1 is a schematic block diagram of an illustrative cloud-edge computing environment including a cloud platform and edge computing platforms;
FIG. 2 is an example of a function block deployment agent suitable for cloud-edge computing resource cost optimization;
FIG. 3 is a flow diagram showing an illustrative method cloud-edge computing resource cost optimization;
FIG. 4 is another flow diagram showing an illustrative method cloud-edge computing resource cost optimization;
FIG. 5 is an example of an allocation schedule for cloud-edge computing resource cost optimization energy management applications on the edge compute platform and the cloud compute platform;
FIG. 6 is an example system that may execute techniques presented herein; and
FIG. 7 is an example of an illustrative cloud-edge computing environment including a cloud platform, an edge platform, and a BESS.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

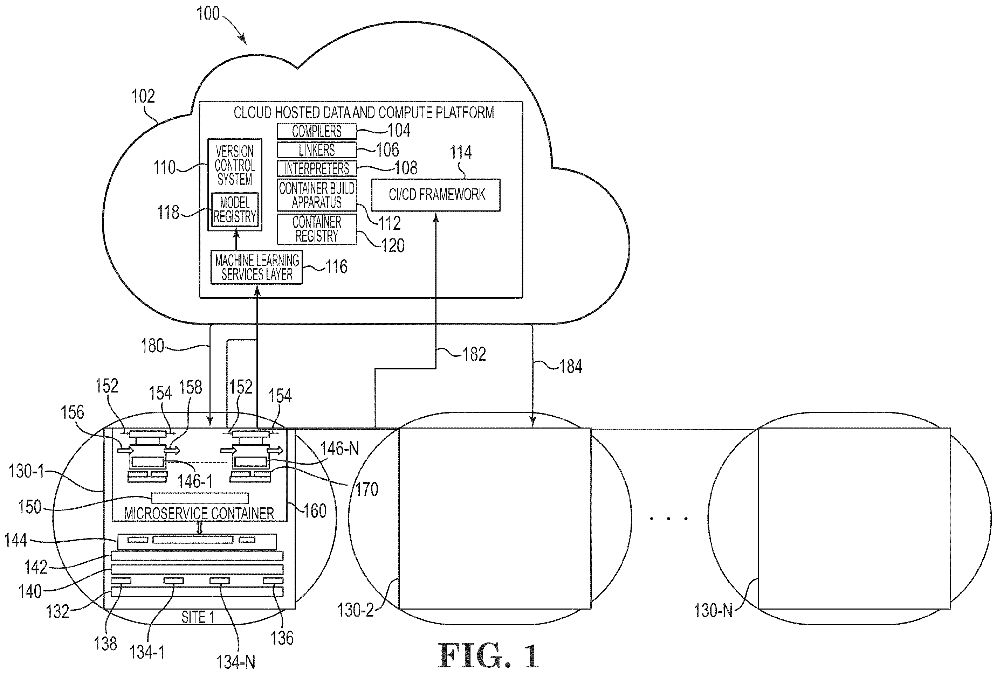

Figure 1 illustrates a comprehensive cloud-edge collaboration platform 100 designed for cloud-edge computing resource cost optimization. For instance, the platform 100 can be employed for optimizing battery state of health tracking and energy storage management, among other possible applications. The platform architecture comprises a cloud-hosted data and compute platform 102 at the top level, which interfaces with multiple distributed edge compute platforms 130-1 (e.g., located at a first geographic site), 130-2 (located at a second geographic site that is different than the first geographic site), ...., 130-N deployed across different geographic locations such as being deployed at multiple different geographic locations associated with a BESS. For ease of illustration, specific components within edge compute platforms 130-2 through 130-N are omitted. However, it is understood that distributed edge compute platforms 130-2, ...., 130-N include the same elements as those detailed herein with respect to distributed edge compute platforms 130-1.

The cloud-hosted data and compute platform 102 (i.e., the cloud compute platform or cloud platform) serves as the centralized intelligence hub and includes several key components working in concert. The cloud platform 102 incorporates development tools including compilers 104, linkers 106, and interpreters 108 for processing application code. A version control system 110 manages code iterations, while a container build apparatus 112 facilitates containerized application creation. The cloud platform 102 implements a CVCD (Continuous Version Control and Deployment) framework, also referred to as a CI/CD (Continuous Integration/ Continuous Deployment) framework114 specifically designed for deploying IEC 61499 Function Blocks that encapsulate both application programs and machine-learning models. A machine-learning services layer 116 provides advanced analytics capabilities, supported by both a model registry 118 and container registry 120 for storing trained models and container images respectively.

At the edge level, each edge compute platform 130-1 through 130-N implements an identical architecture comprising multiple layers. The foundation begins with the hardware infrastructure layer 132, which includes multiple CPUs 134-1 through 134-N, memory resources 136, and FPGA (Field-Programmable Gate Array) hardware 138. This hardware infrastructure layer 132 supports a host operating system 140, which runs a container engine 142 for managing containerized applications. The container engine hosts containers 144 with IEC61499 Runtime environment, permitting the execution of edge analytics applications 146-1 through 146-N which can be implemented as function blocks. The containers 144 with the IEC61499 runtime configuration can serve as the standardized execution environment that ensures consistent operation of function blocks across different edge devices, regardless of the underlying hardware infrastructure. As illustrated in FIG. 1, the containers herein can include various components such as "LIBS" which refer to libraries and "BIN", as is traditionally known.

Each edge site includes an edge serverless function block deployment agent 150, which orchestrates the deployment and execution of function blocks. The agent 150 processes both event In signals 152 and event Out signals 154, as well as data in streams 156 and data out streams 158, managing the bidirectional flow of information between components. The function blocks themselves are housed within microservice containers 160, which provide file transfer capabilities, runtime environments, and host the individual function blocks.

In some embodiments, the edge compute platform is collocated with one or more BESS containers. A BESS container is a modular, self-contained energy storage system that consists of lithium-ion (or other) batteries, power conversion systems (PCS), battery management systems (BMS), and thermal management, all housed in a standardized shipping container-like enclosure. These containers can be deployed to store energy from renewable sources like solar and wind or stabilize electrical grids. In some embodiments, battery performance data can be received (e.g., at an edge compute device or a cloud compute device) from multiple geographically distributed BESS containers. The battery performance data from multiple geographically distributed BESS containers can be aggregated into an aggregated data set, and the machine-learning models (e.g., those trained or configured to optimize cloud-edge compute resource use) can be trained or retrained based on aggregated data set.

The system implements an event-triggered execution model through IEC 61499 function blocks 170, representing a significant advancement over traditional cyclic execution models. Events can originate from both internal BESS operations and external conditions, providing a flexible and responsive control mechanism. Examples of events include those associated with generation and/or updating of one or more schedules, market conditions, and/or forecasts (e.g., demand/load forecasts, energy generation forecasts), among other types of events associated with both internal BESS operations and external conditions. Aspects of such event-triggered models and hierarchical scheduling of energy flows related thereto include those described in U.S. patent publication number 2025/0047105; titled, "Method and system for the hierarchical scheduling of energy flows in microgrids deploying battery energy storage systems", the entire contents of which is herein incorporated by reference.

The architecture enables seamless collaboration between cloud and edge components through sophisticated communication channels, including model deployment channels 180, data feedback channels 182, and configuration update paths 184. The model deployment channel 180, data feedback channel 182, and configuration update path 184 operate in a coordinated manner to enable efficient cloud-edge collaboration for battery energy storage management.

The model deployment channel 180 facilitates the downward flow of trained machine-learning models and function blocks from the cloud platform to edge devices. When new or updated models are developed in the cloud's machine-learning services layer 116, they are packaged with their associated IEC 61499 function blocks and deployed through this channel. This deployment process includes version control and validation to ensure compatibility with edge runtime environments.

The data feedback channel 182 permits continuous improvement of the system by transmitting operational data and performance metrics from edge devices back to the cloud platform. This channel collects battery state of health data, resource utilization metrics, and execution performance data from the edge platforms. The collected data is used to retrain and refine machine-learning models in the cloud, enabling the system to adapt to changing conditions and improve accuracy over time.

The configuration update path 184 provides bidirectional communication for dynamic system optimization. Through this path, the cloud platform can adjust resource allocation policies, update scheduling parameters, and modify function block configurations based on analyzed performance data. Conversely, edge devices can report configuration status and request updates based on local conditions. This bidirectional capability ensures that both cloud and edge components maintain optimal operational parameters.

These channels 180, 182, 184 work together in a continuous optimization loop. For instance, the data feedback channel 182 provides performance data to the cloud, which uses this information to refine models and configurations. These improvements are then deployed back to the edge devices through the Model deployment channel 180, while the Configuration update path 184 ensures proper implementation and operation. This integrated approach enables the system to maintain optimal performance while adapting to changing conditions in the battery energy storage environment.

The interaction between these channels is managed by the Edge Serverless Function Block Deployment Agent 150, which coordinates the deployment of updated models, collection of feedback data, and implementation of configuration changes. This agent ensures that all data transfers and updates occur efficiently while maintaining system reliability and performance

The cloud platform 102 can deploy updated models and configurations to the edge platforms 130 e.g., to edge devices, while edge platforms 130 can send processed data and execution metrics back to the cloud. This bidirectional flow of information enables continuous improvement of the system's performance and accuracy.

The platforms 100 design, including the provisioning of the IEC 61499 function blocks at each of the edge platforms 130, specifically addresses the challenges with distributed/edge compute environments such as battery state of health tracking and energy storage management through its distributed architecture. Edge devices can perform real-time analytics and control functions with minimal latency, while the cloud platform handles more complex tasks such as model training and long-term data analysis. This distribution of responsibilities ensures optimal performance while maintaining system reliability.

The architecture incorporates robust security and reliability features through its containerized approach. Each function block operates within its own container, providing isolation and resource management capabilities. The IEC61499 Runtime environment ensures standardized execution of function blocks across different edge devices, maintaining consistency in system behavior regardless of the underlying hardware infrastructure. However, the use of alternate and/or additional runtime environments and/or operating standards are possible.

This comprehensive architecture enables sophisticated battery management capabilities, including accurate state of health tracking, predictive maintenance, and optimized energy storage operations. The combination of edge computing capabilities with cloud-based analytics and management provides a robust platform for modern energy storage systems, capable of handling both real-time control requirements and long-term optimization needs.

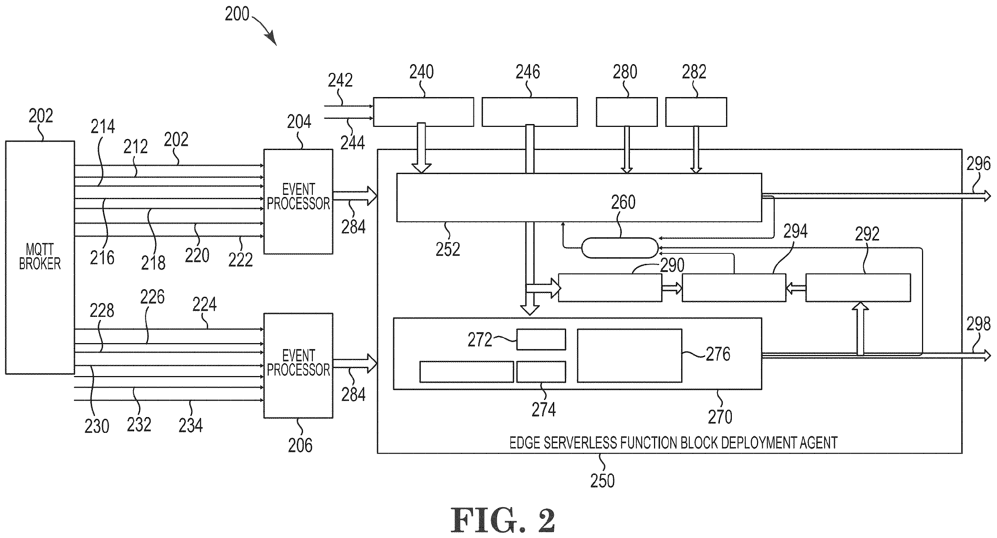

Figure 2 illustrates an example of a comprehensive edge serverless function block deployment Agent 200 architecture. The architecture includes function block deployment agent executing on the edge compute platform. As mentioned, the function block deployment agent may be manifested as an edge Serverless function block deployment agent. An edge Serverless function block deployment agent in the form is a specialized software component that orchestrates the dynamic allocation and execution of containerized function blocks between edge and cloud computing platforms in a distributed energy storage system. The agent comprises an event-driven architecture that processes both Event In/Out signals and Data In/Out streams, utilizing machine-learning models to optimize resource allocation based on real-time CPU and memory availability, historical usage patterns, and energy management system triggers. The agent incorporates a CPU & Memory Allocation Scheduler Policy Function Approximator that continuously evaluates execution costs between edge and cloud platforms, determining optimal resource placement by balancing energy cost savings against computational resource expenses while considering both immediate operational requirements and long-term efficiency goals. Through its integration with edge container and function block registries, the agent manages the deployment of IEC 61499 function blocks within microservice containers, enabling standardized execution across distributed edge devices while maintaining system reliability and responsiveness through intelligent workload distribution between local edge resources and cloud computing infrastructure

The edge serverless function block deployment Agent 200 architecture orchestrates dynamic resource allocation between edge and cloud computing platforms for battery energy storage management. The system begins with an MQTT Broker 202 that serves as the central communication hub, facilitating real-time event-driven messaging between all system components.

The architecture incorporates two event processors 204, 206 that manage distinct data streams. However, architecture can include more of less event processors. With continued reference to FIG. 2, the first event processor 204 receives and processes long-term forecasting data, including long term microgrid power demand forecast 210, a long term microgrid renewable power generation forecast 212, a long term microgrid battery aggregate SOC forecast 214, a long term energy price forecast 216 (e.g., dynamic pricing models), and a long term hyper local weather forecast 218. This processor additionally handles Manual Schedule overriding autonomous schedule 220 and Aggregate Long Term Schedule for multiple microgrids 222, ensuring comprehensive long-term resource planning.

The second event processor 206 focuses on immediate operational needs, processing short term microgrid power demand forecast 224, short term microgrid renewable generation forecast 226, short term microgrid battery SOC forecast 228, real time microgrid response time 230, and short term hyper local weather station forecast 232. This processor also manages aggregated short term schedule for multiple microgrids 234 and manual schedule overriding autonomous schedule 236, permitting responsive resource allocation.

The above mentioned forecasts and schedules are merely examples as some of the forecasts/schedules may be omitted, replaced with alternate forecasts/schedules (e.g., dynamic pricing models), and/or include additional forecasts/schedules.

A CPU & memory resource monitor agent 240 continuously tracks system resource availability, monitoring CPU free status 242 and memory free status 244, while maintaining detailed microservice CPU & Memory usage history 246. This monitoring data feeds directly into the Machine-learning model-based serverless function block execution agent 250, which incorporates a sophisticated CPU & memory allocation Scheduler Policy Function Approximator 252.

The system implements an advanced feedback loop through the policy updating function 260, which continuously refines the scheduling algorithm based on real-world performance metrics. The Mixed-Integer Linear Programming (MILP) CPU and memory schedule optimization agent 270 operates within specific constraints, including CPU cycles per second 272 and a memory footprint 274. The MILP CPU and memory schedule optimization agent 270 objective function 276 that maximizes value by balancing energy cost savings against CPU cycle & memory cost, considering both immediate operational needs and long-term efficiency goals. The MILP CPU and memory schedule optimization agent 270 is a specialized software component that employs mixed integer linear programming techniques to optimize the allocation of computing resources between edge and cloud platforms in a distributed energy storage system. The MILP CPU and memory schedule optimization agent 270 operates by evaluating specific constraints including CPU cycles per second limitations and total available memory, while optimizing an objective function that maximizes the difference between energy cost savings and computational resource costs. The MILP CPU and memory schedule optimization agent 270 calculates costs based on actual historical CPU and memory allocation patterns, comparing these against ideal schedules to determine optimal resource distribution. The MILP CPU and memory schedule optimization agent 270 implements sophisticated algorithms to evaluate the energy cost associated with deferred execution on edge platforms against the computational costs of cloud execution, permitting dynamic workload distribution decisions that minimize total operational expenses while maintaining system performance requirements. The agent works in conjunction with a policy updating function to continuously refine its optimization parameters based on real-world performance metrics and changing operational conditions, ensuring sustained efficiency in resource allocation across the distributed computing infrastructure

The edge container registry 280 and edge function block registry 282 work in concert to provide essential resources for deployment, while the event bus 284 ensures seamless communication between all system components. The architecture enables sophisticated dynamic resource allocation through continuous evaluation of execution costs between edge and cloud options.

The system performs ongoing cost calculations based on actual historical CPU & memory allocation 290 and compares these against ideal schedules 292 through a comprehensive schedule performance analyzer 294. This analysis feeds back into the policy update mechanism, ensuring continuous optimization of resource allocation decisions. The deployment agent generates two critical outputs: a schedule for CPU & memory allocation on edge platform and cloud platform 296 for immediate execution, and an ideal schedule for CPU & memory allocation 298 that serves as a benchmark for future optimization.

This sophisticated architecture ensures efficient utilization of compute resources while maintaining optimal performance for battery energy storage management applications. The system's ability to dynamically balance workloads between edge and cloud platforms, based on real-time conditions and historical performance data, represents a significant advancement in distributed computing resource management for energy storage systems

Some elements and/or interconnections in various Figures such as Figures 1-2 may be omitted for ease of illustration.

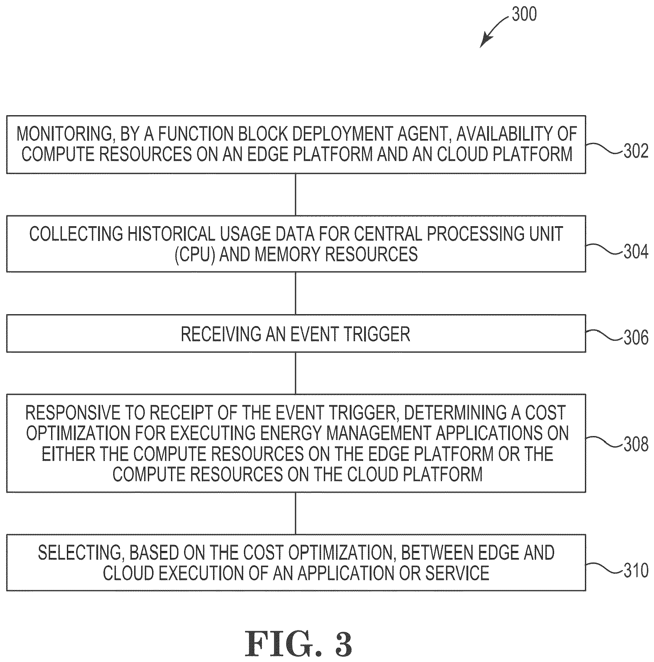

Figure 3 illustrates an example of a method 300 for optimizing resource allocation between cloud and edge platforms. At 302, the method 300 includes monitoring availability of compute resources on an edge platform (e.g., the edge platforms 130, as illustrated in FIG. 1) and a cloud platform (e.g., the cloud platform 102, as illustrated in FIG. 1). The compute resources can refer to virtual machines, bare metal servers, containers, graphics processing units (GPUs), field-programmable gate arrays ( FPGAs) and/or serverless computing resources. For example, in some embodiments at least a portion of or all of the compute resources one the edge platform or the cloud platform can be manifested as serverless computing resources. In some embodiments at least a portion of or all of the compute resources one the edge platform or the cloud platform can be manifested as GPUs.

In various examples, the method 300 can include monitoring, by a function block deployment agent, availability of compute resources on an edge platform and a cloud platform. The availability can refer to various resource utilization metrics such as CPU utilization (e.g., CPU usage %), memory usage (memory usage %), latency, a quantity of processes, applications, and/or threads, Disk I/O, Network speeds and/or throughput (e.g., Mbps, Gbps, etc.), various uptime and/or downtime metrics, and/or various failure or recovery metrics. For example, in some embodiments, both CPU and memory utilization can be determined for each of the cloud platform and the edge platform.

At 304, the method 300 can include collecting historical usage data for CPU and memory resources. For instance, the historical usage data from the CPU and memory resources at the cloud platform and at the edge platform can be collected with one or more of the function blocks herein such as the function block deployment agent. The historical usage data of the compute resources can be collected for any period of time such as the past week, past month, past three months, past six months, past year, etc. Examples of historical usage data include historical CPU usage (e.g., CPU usage % such as an average CPU usage %t over a period of time) and historical memory usage (e.g., memory usage % such as an average memory usage %t over a period of time), among other types of historical usage data such as latency, downtime, uptime, etc.

At 306, the method 300 can include receiving an event trigger. For instance, the event trigger can be received e.g., at one or more components of the edge platforms from an energy management system such as a BESS. Examples of event triggers include the occurrence a predetermined scheduling event (e.g., a predetermined time to determine a short term and/or long term schedule), a change in a status of one or more components (e.g., a change in a battery health status and/or another status associated with the BESS), among other types of event triggers.

Responsive to receipt of the event trigger, the method 300 can proceed to 308. Hence, unlike previous approaches that continuously or periodically transmit monitoring data from edge platforms to the cloud platform, the approaches herein can transmit monitoring data from the edge platforms to the cloud platforms responsive to the occurrence of an event.

At 308, the method 300 can include determining a cost optimization for executing energy management applications on the cloud platform or one or more of the edge platforms. As used herein, cost optimization refers to reducing a cost associated with executing an energy management application while maintaining or improving performance, scalability, and reliability. For instance, the cost optimization can be determined by evaluating an energy cost associated with deferred execution on the edge platform, evaluating a compute cost for execution on the cloud platform, and selecting between edge and cloud execution based on the minimum cost determination. As mentioned, the minimum cost determination can occur in real-time, in some embodiments. For instance, the minimum cost determination can be based on real data such as real-time availability of compute resources on an edge platform and a cloud platform.

In some embodiments, the method 300 can include generating a resource allocation schedule based at least on the determined cost optimization. For example, a task, program, application, process, etc. may be scheduled for execution with either the compute resources located at the cloud platform or the edge platform to minimize cost, while also complying with other requirements such as ensuring that memory or computing resource capability at the edge platform does not exceed a threshold level and/or ensuring that a desired degree of performance (e.g., a desired degree of latency) is maintained.

At 310, the method 300 can include selecting, based on the cost optimization, between edge and cloud execution of an application or service. That is, the execution of services or applications can use either the compute resources of the edge platform or the compute resources of the cloud platform as indicated in resource allocation schedule.

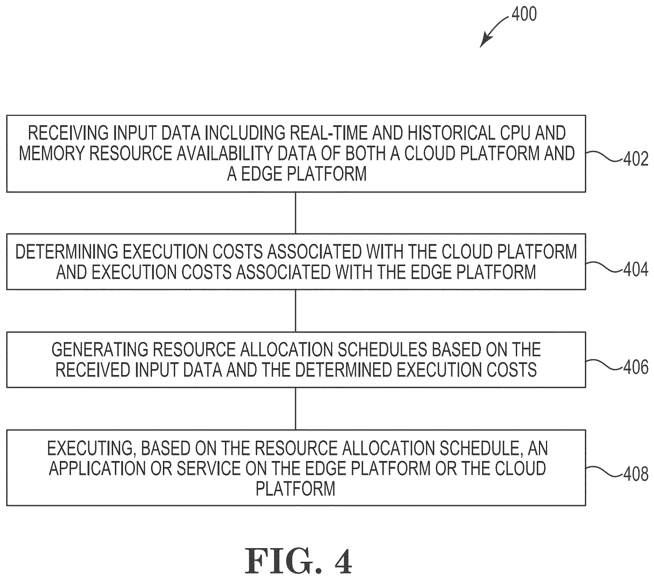

Figure 4 illustrates another example of a method 400 for optimizing resource allocation between cloud and edge platforms. At 402, the method 400 comprises receiving input data, as described herein. For instance, the method 400 can include receiving input data including real-time and historical CPU and memory resource availability data of both a cloud platform and an edge platform. The data can be received continuously, periodically, and/or responsive to an input (e.g., responsive to an input from an operator and/or automatically response to an occurrence of an event such as a those described herein). For instance, the edge serverless function block deployment agent, as described herein, can receive data including CPU and memory resource availability data from the CPU & memory resource monitor agent and can access historical usage datasets such as those stored in the edge platform and/or the cloud platform.

In some embodiments, the method 400 can include processing forecast data and/or generation of processed forecast data, as described herein. For instance, the event processor (e.g., the event processor 204 and/or 206, as described herein with respect to FIG. 2) can perform data transformation such as data transformation using fast fourier transform and discrete wavelet transform on both long-term and short-term forecast data, including microgrid power demand, renewable power generation, battery SOC, energy price, and/or local weather forecasts, etc.

In some embodiments, the method 400 can include analyzing resource utilization patterns, as described herein. For instance, the machine-learning model-based serverless function block execution agent, as described herein, can implement a CPU & memory allocation scheduler policy function approximator to analyze historical resource usage patterns and predict future requirements.

At 404, the method 400 can include determining execution costs, as described herein. For instance, the MILP CPU and memory schedule optimization agent calculates costs by evaluating CPU cycles per second constraints, total memory footprint requirements, and comparing energy cost savings against computational resource expenses for both edge and cloud execution options. For example, the method 400 can include determining execution costs associated with the cloud platform and execution costs associated with the edge platform.

At 406, the method 400 can include generating resource allocation schedules, as described herein. The allocation schedule can be generated based on the received input data (received at 402) and the determined execution costs (determined at 404). For instance, the systems herein can generate both immediate execution schedules and ideal reference schedules for CPU & Memory Allocation between edge and cloud platforms based on the cost analysis and optimization calculations using the input data and the determined execution costs.

In some embodiments, the method 400 can include implementing policy updates, as described herein. For instance, the policy updating function herein can periodically, continuously, and/or responsive to an event such as those described herein proceed with refining the scheduling algorithm. For instance, the policy updating function can refine the scheduling algorithm by comparing actual historical CPU & memory allocation costs against predicted costs and analyzing schedule performance metrics. A policy update Function is a specialized software component that continuously refines and optimizes resource allocation decisions by interfacing between the Machine-learning model-based Serverless Function Block Execution Agent and the MILP CPU and Memory Schedule Optimization Agent. The policy update function implements a feedback loop mechanism that compares actual performance metrics against predicted outcomes, analyzing the difference between historical CPU and memory allocation costs and ideal schedules generated by the MILP solver. When the MILP solver generates a schedule with lower total weighted cost than the machine-learning model's schedule, the policy update function triggers retraining of the neural network model with new data to improve future allocation decisions. The function maintains system optimization by evaluating both immediate operational costs and long-term efficiency goals, while continuously adapting to changing conditions in the distributed computing environment. Through its integration with both machine-learning and MILP components, the policy update function serves as a critical bridge that enables dynamic improvement of resource allocation strategies based on real-world performance data and computational cost analysis

In some embodiments, the method 400 can include deploying function blocks 314, as described herein. For instance, the edge container registry and edge function block registry can coordinate to deploy containerized IEC 61499 function blocks according to the optimized resource allocation schedule.

At 408, the method 400 can include executing, based on the resource allocation schedule (e.g., based in part on the determined executing costs and/or availability of CPU/memory at the cloud/edge, etc.), an application or service on the edge platform or the cloud platform, as described herein. In some embodiments, the method 400 can include monitoring real-time performance, as described herein. For instance, the systems herein can track execution efficiency through continuous, periodic, or responsive to an event such as those described herein, evaluation of resource availability, latency measurements, and cost optimization effectiveness across both edge and cloud platforms.

In some embodiments, the method 400 can include updating allocation policies, as described herein. For instance, the systems herein can implement machine-learning model updates based on performance metrics, adjusting resource allocation policies to reflect changing operational conditions and requirements.

In some embodiments, the method 400 can include optimizing long-term efficiency, as described herein. For instance, the system herein can maintain optimal performance through continuous, periodic, or responsive to detection of an event such as those described herein, refinement of allocation strategies, balancing immediate operational needs against long-term cost optimization goals.

In some embodiments, the method 400 can include compressing and encrypting data, as described herein. For instance, the systems herein can implement data compression before data transmission (e.g., data indicative of CPU and/or MEMORY usage of compute resources) between edge and cloud platforms to minimize network resource utilization and ensure secure data transfer. As mentioned, implementing data compression can reduce an amount of network traffic, reduce a frequency of network traffic, and/or reduce an amount of computation overhead associated with the approaches herein, as compared to other approaches such as those that continuously or periodically transmit data between a cloud platform and one or more edge platforms.

In some embodiments, the method 400 can include managing data retention, as described herein. For instance, the systems herein can implement a tiered storage strategy, maintaining short-term operational data on the edge platform while archiving historical data in the cloud platform for long-term analysis and model training. Maintaining a tiered storage approach with regard to data such as operational data can promote aspects herein. For instance, reducing an amount of network traffic, reduce a frequency of network traffic, and/or reduce an amount of computation overhead associated with the approaches herein, as compared to other approaches such as those that continuously or periodically transmit data between a cloud platform and one or more edge platforms.

In some embodiments, the method 400 can include validating allocation decisions, as described herein. For instance, the systems herein can execute a mixed integer linear programming solver to validate machine-learning model allocation decisions and ensure optimal resource distribution.

In some embodiments, the method 400 can include coordinating event-driven communication, as described herein. For instance, the MQTT broker, as described herein, can facilitate real-time message exchange between edge and cloud components, enabling responsive resource allocation adjustments. Such real-time adjustments can promote aspects herein, for instance, cost-efficient and effective management of distributed systems (e.g., distributed BESS components located at different geographic locations).

In some embodiments, the method 400 can include implementing edge acceleration, as described herein. For instance, the systems herein can leverage edge hardware acceleration capabilities through FPGA integration for compute-intensive operations requiring low latency.

Aspects of the illustrative methods herein can be performed with or via one or more of the components described herein. For instance, the illustrative methods herein can be performed in conjunction with or by at least a computing device and/or a function block (e.g., function block deployment agent executing on the edge compute platform), described herein with respect to FIGS. 1-2, among other possible components.

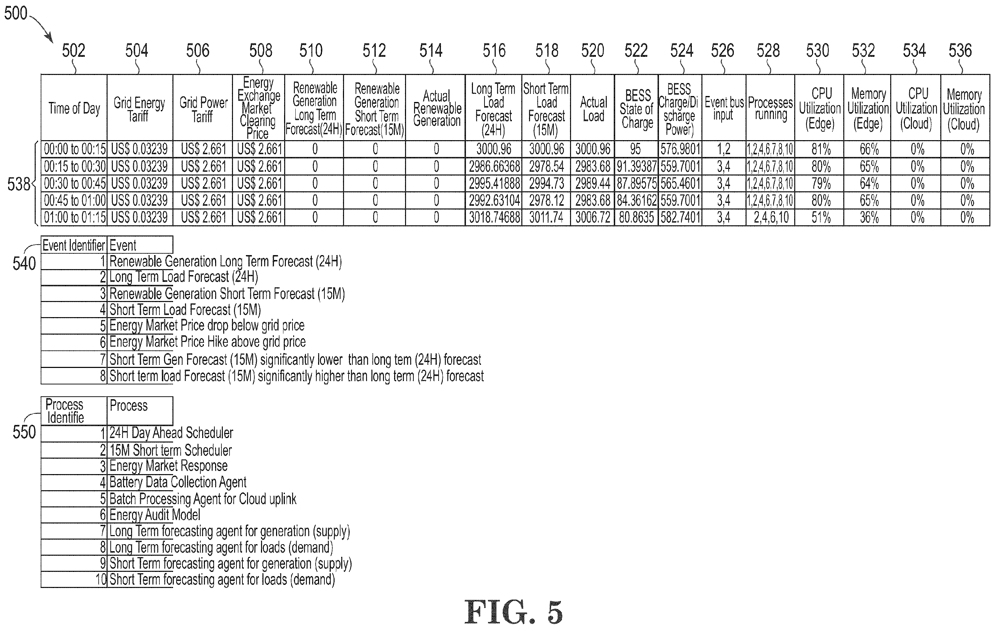

FIG. 5 is an example of an allocation schedule 500 for cloud-edge computing resource cost optimization energy management applications on the edge compute platform and the cloud compute platform. As illustrated in FIG. 5, the schedule 500 can include various types of information such as a time of day 502, a grid energy tariff 504, a grid power tariff 506, an energy exchange market clearing price 508, a renewable generation long term forecast 510 (e.g., 24 hours, etc.), a renewable generation short term forecast 512 (e.g., 15 minutes), an actual renewable generation amount 514, a long term load forecast (e.g., 24 hours) 516, a short term load forecast (e.g., 15 minutes) 518, an actual load 520, BESS state of charge 522, BESS charge/discharge power 524, event bus input 526, processes running 528, CPU utilization (edge) 530, memory utilization (edge) 532, CPU utilization (cloud) 534, and memory utilization (cloud) 536. The time of day 502 can correspond to a plurality of time intervals. For instance, the time of day can be represented in a plurality of 15 minute time intervals, as illustrated in FIG. 5, among other possibilities. While FIG. 5 illustrates four distinct time intervals (e.g., four 15 minute time intervals) spanning an hour, it is understood that the time of day can include any quantity of time intervals associated with any time period (e.g., one day, one week, etc.).

A key can be provided for one or more different types of information in schedule 500. This key serves to correlate an identifier, such as a numerical identifier, with a specific type of event or process.

For example, a first key 540 may associate event identifiers, such as 1, 2, and 3, with corresponding event types. These events may include a renewable generation long-term forecast, which spans 24 hours, a long-term load forecast, also covering 24 hours, and a renewable generation short-term forecast, which is based on a 15-minute interval.

Similarly, a second key 550 may associate process identifiers with their respective processes. These processes may include a 24-day-ahead scheduler, a 15-minute short-term scheduler, and an energy market response mechanism. Additional processes may involve a battery data collection agent, a batch processing agent responsible for cloud uplink, and an energy audit model. Furthermore, the system may incorporate a long-term forecasting agent for generation, which focuses on supply predictions, as well as a long-term forecasting agent for loads, which focuses on demand predictions. Additionally, a short-term forecasting agent may be dedicated to generation, while another may handle short-term forecasting for loads. Other types of processes may also be included depending on system requirements.

A portion or all of the processes that are executed or run during a given time of day may utilize the computational resources of the edge computing platform. For instance, as illustrated in FIG. 5, all processes executed during each of the four time intervals 538 rely on the computing resources of the edge computing platform. However, in some instances, either all or a portion of the processes running during a given time interval may instead utilize the computing resources of the cloud computing platform. This flexibility allows for optimized compute resource allocation based on system demands and computational efficiency.

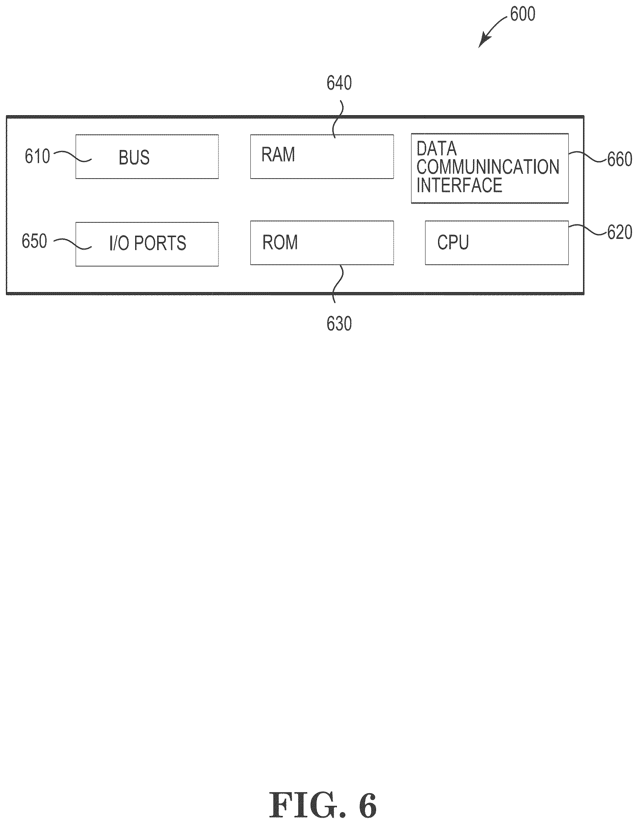

FIG. 6 illustrates an example system 600 that may execute the techniques presented herein. FIG. 6 is a simplified functional block diagram of a computing platform that may be configured to implement the described techniques, according to exemplary embodiments of the present disclosure. For instance, various interconnection between components are omitted for ease of illustration.

Specifically, the computing platform (or "platform," as it may not be limited to a single physical computing infrastructure) includes a data communication interface 660 for packet-based data communication. The platform is further equipped with a central processing unit (CPU) 620, which may consist of one or more processors capable of executing program instructions.

To facilitate internal operations, the platform includes an internal communication bus 610, enabling seamless data exchange among its various components. Additionally, the platform incorporates program storage and/or data storage components, such as read-only memory (ROM) 630 and/or random-access memory (RAM) 640, which are used for storing program instructions and processing data. However, system 600 may also receive programming instructions and data dynamically via network communications. Furthermore, the platform is equipped with input and output ports 650, which allow for connectivity with peripheral input and output devices such as keyboards, mice, touchscreens, monitors, and displays.

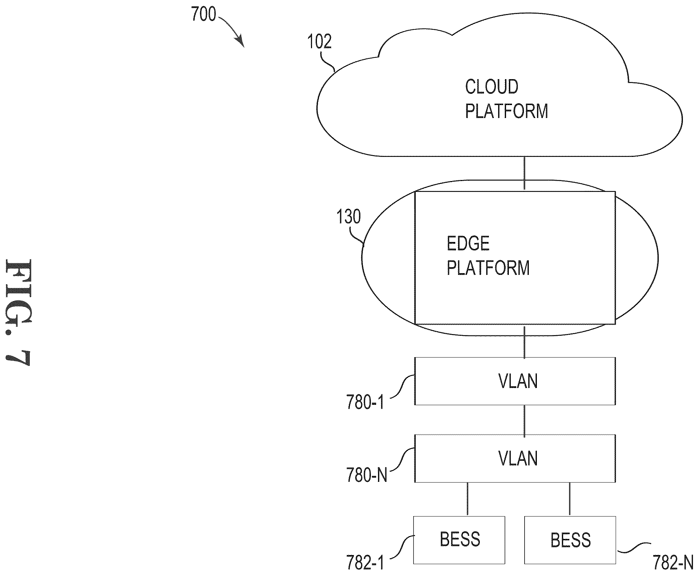

FIG. 7 is an example of an illustrative cloud-edge computing environment 700 including a cloud platform 102, an edge platform 130, and a BESS such as the BESS 782-1, ..., 782-N (collectively referred to herein as "BESS" 782"). The cloud platform 102 and the edge platform 130 may be analogous to the cloud platform and the edge platform 130, described herein, for instance with respect to FIG. 1. The BESS 782 is analogous to the BESS described herein. The BESS 782 can include a plurality of BESS units (e.g., battery storage units) and one or more BESS controllers. The BESS 782 can be included in or communicatively coupled to the edge platform 130.

The system architecture illustrated in FIG. 7 and as detailed herein includes a comprehensive cloud-hosted data and compute platform that interfaces with multiple edge compute platforms distributed across different sites such as those associated with the BESS 782. The cloud platform 102 contains development and deployment components including compilers, linkers, interpreters, and a container build apparatus, along with version control systems and model registries that support a machine learning services layer. This cloud infrastructure implements a CVCD framework specifically designed for deploying IEC 61499 function blocks that encapsulate application programs and machine learning models. At the edge level, the system employs an edge serverless function block deployment agent that coordinates with multiple components to optimize resource allocation. This agent receives real-time information about resource availability from a CPU & memory resource monitor agent and accesses function blocks and containers through dedicated registries. The system processes both long-term and short-term forecasts through event processors that handle various metrics including microgrid power demand, renewable power generation, battery state of charge, energy pricing, and weather conditions. A machine learning model-based scheduler manages resource allocation using a policy function approximator that continuously learns from historical usage patterns and performance data. The MILP CPU and memory schedule optimization agent implements an objective function that balances energy cost savings against computational resource costs, operating within defined constraints for CPU cycles and memory availability. The system maintains a feedback loop where the policy update function can intermittently, periodically, or continuously refines the ML model's performance based on comparisons between actual and ideal resource allocation patterns. For data management and security. The edge data platform 130 connects to the cloud data platform 102 through IOT device integration engines and a Data Hub, with encryption/decryption agents ensuring secure communication between edge and cloud components. For instance, the edge platform 130 can be coupled via one or more ports such as one or more VLAN's 780-1, ...., 780-N to the BESS 782. In some embodiments, a microgrid controller (e.g., an uplink controller) can be communicatively coupled between the VLAN's 780-1, ..., 780-N and the BESS 782 to initiate or control data flow between the edge platform 130 and the BESS 782. The above described integrated architecture, as detailed herein, permits efficient resource allocation while optimizing both energy usage and computational costs across the distributed system. While FIG. 7 illustrates the presence of a BESS, as mentioned the systems and methods herein are not limited to BESS or energy management systems and may be employed with other systems and/or management applications.

It is important to note that the various system functions may be implemented in a distributed manner across multiple similar computing platforms, thereby distributing the processing load for enhanced performance and scalability. Alternatively, the system may be implemented through appropriate programming of a single computing hardware platform, depending on the specific requirements of the implementation.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A system for optimizing compute resource allocation in a distributed computational environment, comprising:
an edge compute platform having a processor and memory;
a cloud compute platform having a processor and a memory, the cloud compute platform being communicatively coupled to the edge compute platform; and
a function block deployment agent executing on the edge compute platform configured to:
receive data related to availability of central processing unit (CPU) and memory resources in the cloud platform and the edge compute platform;
receive historical datasets of CPU and memory usage;
process the received data and historical datasets to determine CPU/memory costs associated with the cloud compute platform and the edge compute platform; and
generate an allocation schedule for management applications between the edge compute platform and the cloud compute platform.

2. The system of claim 1, wherein the function block deployment agent is a machine-learning model-based serverless function block execution agent, wherein the machine-learning model-based serverless function block execution agent comprises:
a CPU and memory resource monitor agent configured to track real-time resource availability on at least the edge compute platform; and
an event processor configured to process forecast data.

3. The system of any preceding claim, wherein the function block deployment agent further comprises a mixed-integer linear programming (MILP) CPU and memory schedule optimization agent that is configured to:
evaluate CPU cycles per second constraints;
evaluate memory footprint requirements; and
optimize an objective function balancing energy cost savings against CPU and memory costs.

4. The system of any preceding claim, wherein the function block deployment agent implements a policy update function configured to:
analyze actual versus predicted resource utilization;
compare actual costs against ideal costs; and
retrain a machine-learning model based on the comparison.

5. The system of any preceding claim, wherein the edge compute platform comprises one or more CPUs, an field programmable gate array (FPGA), a container engine, and an IEC61499 Runtime environment.

6. The system of any preceding claim, wherein the cloud compute platform comprises a machine-learning services layer, a model registry, a container registry, and a CVCD framework for deploying IEC 61499 Function Blocks.

7. A method for optimizing resource allocation between edge and cloud platforms in a distributed computational system, comprising:
monitoring, by a function block deployment agent, real-time availability of compute resources on an edge platform and a cloud platform;
collecting historical usage data for central processing unit (CPU) and memory resources;
receiving an event trigger from a management system;
responsive to receiving the event trigger, determining a cost optimization for executing management applications on either the compute resources on the edge platform of the compute resources on the could platform by:
evaluating an energy cost associated execution on the edge platform; and
evaluating a compute cost for execution on the cloud platform, and
selecting, based on the cost optimization, between edge and cloud execution of an application or service.

8. The method of claim 7, further comprising implementing data compression before transmission between platforms, encrypting data transmissions between platforms, and optimizing network resource usage through compressed data transfer.

9. The method of either of claims 7 or 8, further comprising:
storing short-term operational data on the edge platform; and
archiving long-term data on the cloud platform.

10. The method of any of claims 7-9, further comprising executing a trained machine-learning model on the edge platform, performing model training operations on the cloud platform, and updating the trained models based on aggregated data from multiple edge devices.

11. The method of any of claims 7-10, further comprising: implementing an MQTT broker for event-driven communication, processing both event In/Out signals and data In/Out streams, coordinating real-time message exchange between platforms, or any combination thereof.

12. The method of any of claims 7-11, further comprising validating machine-learning model decisions using a mixed integer linear programming solver, comparing actual versus ideal resource allocation, updating allocation policies based on validation results, or any combination thereof.

13. A non-transitory, computer-readable medium including instructions that when executed by a processor cause the processor to:
receive resource availability data from an edge compute platform and a cloud compute platform, wherein the edge compute platform is collocated with one or more battery energy storage system (BESS) containers;
accessing historical resource utilization data and battery state of health data from the one or more BESS containers;
receive an event trigger from a battery energy storage system BESS energy management system indicating a change in battery operating conditions of the BESS;
execute a machine-learning model to:
analyze the resource availability data, historical utilization data, and battery state of health data of the BESS;
determine processing costs for edge execution versus cloud execution;
generate a resource allocation schedule for energy management applications between the edge platform and cloud platform based on the determined costs; and
minimize costs associated with calculation or forecasting battery performance of the BESS through intelligent distribution of utilization of compute resources of the edge platform and the cloud platform in accordance with the resource allocation schedule.

14. The computer-readable medium of claim 13, wherein the instructions further comprise instructions to monitor performance of the battery energy storage system by tracking battery state of charge parameters, compare actual battery performance against predicted performance metrics, and retrain the machine-learning model based on the comparison.

15. The computer-readable medium of either of claims 13 or 14, wherein the instructions further comprise instructions to optimize resource allocation associated with minimizing battery degradation of the BESS.
